# EUROPÄISCHE PATENTSCHRIFT

(11) **EP 0 476 169 B1**
(45) Veröffentlichungstag und Bekanntmachung des Hinweises auf die Patenterteilung: **01.03.1995**
(21) Anmeldenummer: 90118025.7
(22) Anmeldetag: 19.09.1990
(51) Int. Cl.: B04C 5/22, B04C 5/13

(54) **Verfahren zum Reinigen eines Zyklons und damit reinigbarer Zyklon**
Method of cleaning a cyclone and cyclone apt to be cleaned using this method
Procédé de nettoyage d'un cyclone et cyclone pouvant être nettoyé en utilisant ce procédé

(43) Veröffentlichungstag der Anmeldung: 25.03.1992
(73) Patentinhaber: Krämer, Erich, 96247 Michelau (DE)
(72) Erfinder: Krämer, Erich, 96247 Michelau (DE)
(74) Vertreter: Hering, Hartmut, Dipl.-Ing.

(56) Entgegenhaltungen:
- EP-A- 0 087 778
- EP-A- 0 278 793
- DE-A- 3 836 220
- DE-A- 3 915 457
- PATENT ABSTRACTS OF JAPAN vol. 5, no. 71 (C-54)(743) 13 Mai 1981,& JP-A-56 21657 (AZUMA SOUFUUKI K.K.) 28 Februar 1981,

## Beschreibung

Die Erfindung betrifft eine Kombination gemäß dem Oberbegriff der Patentansprüche 1,4,7 und 8. Eine bekannte Kombination dieser Art (EP-A-0 278 793) hat eine Zyklondecke, die von dem Tauchrohr durchsetzt und mit diesem fest verbunden ist. Das Tauchrohr geht von dem oberhalb der Zyklondecke angeordneten Boden des Reingaskanals aus. Beim Betrieb des Zyklons im Bereich zwischen Zyklon-Innenwand und Tauchrohr, insbesondere an der Außenseite des Tauchrohrs und an der Unterseite der Zyklondecke kommt es zu Pulverablagerungen, die bei der insbesondere für einen Farbwechsel erforderlichen Reinigung von dem Reinigungsluftstrom nur ungenügend erfaßt werden. Man behilft sich deshalb bisher so, daß diese Bereiche von Hand gereinigt werden. Das ist schwierig und zeitraubend und führt darüberhinaus meist nur zu einer unvollständigen Reinigung, weil kaum alle Winkel und Ecken erfaßt werden können.

Um an schwer zugängliche Bereiche heranzukommen, ist vorgeschlagen worden, eine Tür in der Wand des Zyklons vorzusehen, was aufwendig ist und darüberhinaus zu Störungen des Luftstroms bei der Abscheidung des Pulvers führt, weil eine Tür nie vollständig glatt in die Wand des Zyklons eingebaut werden kann. Schließlich muß dabei auch nach dem manuellen Reinigungsvorgang nochmals ein Reingasluftstrom hindurchgeleitet werden, um die beim manuellen Abreinigen herabgefallenen und an den unteren Wandbereichen des Zyklons haftengebliebenen Pulverpartikel zu entfernen. Anstelle der erwähnten Türe wäre es zwar auch möglich, den konischen Teil des Zyklons geteilt oder den Zyklon durchgehend als geraden Zylinder auszubilden und die manuelle Abreinigung von unten her durchzuführen; dies ist aber nicht nur äußerst mühsam sondern führt auch zu einer verminderten Geschwindigkeit der Reinigungsluft-Strömung bzw. zu einem erhöhten Platzbedarf, insbesondere dann, wenn mehrere nebeneinander angeordnete Zyklone an ihrer Unterseite in einen gemeinsamen Pulverauffangbehälter einmünden sollen.

Der Erfindung liegt deshalb die Aufgabe zugrunde, eine Kombination der erläuterten Art so auszubilden, daß er in vergleichsweise kurzer Zeit exakt abgereinigt werden kann. Weiterhin soll mit der Erfindung ein Verfahren zum einfachen und vollständigen Reinigen einer solchen Kombination angegeben werden.

Die gestellte Aufgabe löst eine Kombination gemäß der Patentansprüche 1,4,7 und 8 Ein Verfahren zur Reinigung einer solchen Kombination ist in Patentanspruch 11 angegeben.

Einzelheiten der Erfindung werden nachfolgend anhand der Zeichnung erläutert. Es zeigen:
- Fig. 1: im Vertikalschnitt eine Gruppe von drei Zyklonen nach einer ersten Ausführungsform, die an einen gemeinsamen Reingaskanal und eine gemeinsame Pulversammelkammer angeschlossen sind,
- Fig. 2: einen Vertikalschnitt durch einen der Zyklone von Fig. 1, und zwar geschnitten im rechten Winkel zur Zeichenebene von Fig. 1,
- Fig. 3: die Gruppe von drei Zyklonen nach Fig. 1, wobei jedoch die Tauchrohre herausgenommen sind,
- Fig. 4: einen Teilschnitt durch den oberen Teil eines Zyklons nach einer zweiten Ausführungsform,
- Fig. 5: einen Horizontalschnitt nach der Linie V-V von Fig. 4,
- Fig. 6: einen Vertikalschnitt durch den oberen Teil eines Zyklons nach einer dritten Ausführungsform, und
- Fig. 7: einen Horizontalschnitt nach der Linie VII-VII von Fig. 6.

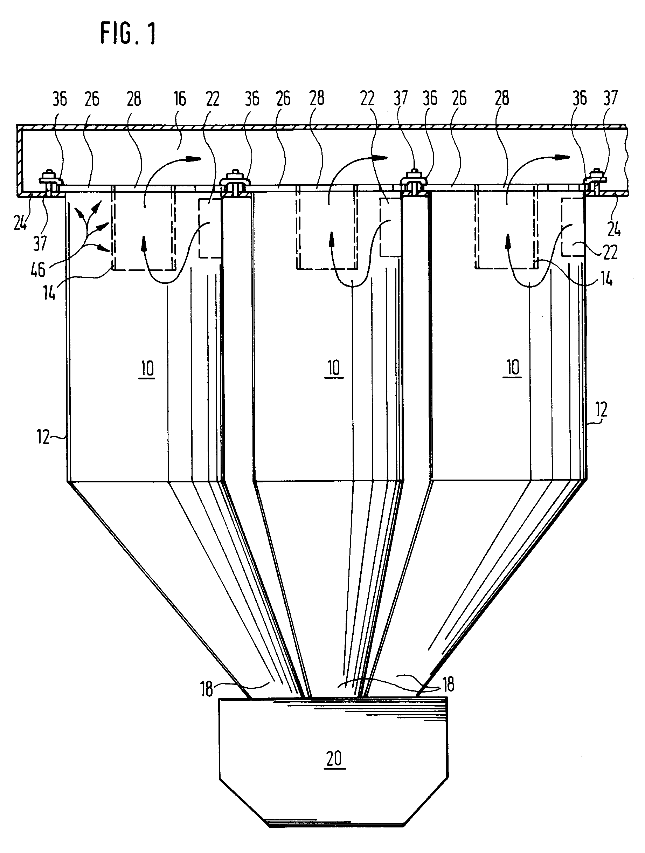

Die Ausführungsform nach den Figuren 1 bis 3 stellt - im Gegensatz zu nachfolgend beschriebenen Ausführungsformen - nur eine "halbautomatische" Lösung dar, eignet sich jedoch besonders zur Erläuterung des Grundprinzips der Erfindung und wird aus diesem Grund an den Anfang der Beschreibung gestellt.

Fig. 1 zeigt drei nebeneinander angeordnete und zu einer Einheit verbundene Zyklone 10, die an eine (oder mehrere) nicht gezeigte Pulverbeschichtungskabine angeschlossen sind, aus der überschüssiges Pulver abgesaugt und in den Zyklonen 10 rückgewonnen werden soll.

Am oberen Ende des Gehäuses 12 jedes Zyklons 10 ist ein Tauchrohr 14 angeordnet, das sich im Zyklon koaxial und zentrisch von oben nach unten erstreckt. Das obere Ende jedes Tauchrohrs 14 mündet in einen gemeinsamen Reingaskanal 16, aus dessen Boden kreisscheibenförmige Öffnungen 28 ausgeschnitten sind, deren Durchmesser dem Durchmesser des jeweils zugeordneten Tauchrohrs 14 entspricht. Der Boden 24 des Reingaskanals 16 bildet zugleich den oberen Abschluß bzw. den Deckel der Zyklone 10, womit Reingaskanal und Zyklone unmittelbar miteinander verbunden sind.

Die unteren Enden 18 der Zyklone 10 verengen sich konisch und münden in einen gemeinsamen Pulverbehälter 20, in welchem sich das in den Zyklonen 10 abgeschiedene Pulver ansammelt.

Das aus der nicht-gezeigten Pulverkabine abgesaugte Pulver-Luft-Gemisch wird den Zyklonen 10 durch Eintrittsöffnungen 22 zugeleitet, die sich im äußeren oberen Bereich des Zyklons befinden und für eine in etwa tangentiale Einleitung sorgen, derart, daß der eingeleitete Pulver-Luft-Strom eine schraubenförmige Bewegung durchführt. Das untere Ende des Tauchrohrs 14 liegt tiefer als das untere Ende der Eintrittsöffnung 22. Damit wird erreicht, daß das durch die Öffnungen 22 eintretende Pulver-Luftgemisch sich zunächst schraubenförmig nach unten bewegen muß, wobei das Pulver infolge seines spezifischen Gewichts nach unten fällt und in den Pulverbehälter 20 gelangt, wohingegen die vom Pulver befreite Luft durch das Tauchrohr 14 hindurch nach oben in den Reingaskanal 16 strömt und aus diesem in die Atmosphäre abgeleitet wird. Die Abscheidung des Pulvers wird dabei dadurch unterstützt, daß es bei den erwähnten Strömungsverhältnissen gegen die Innenwandung des Zyklons gedrückt und mit der Außenwand des Tauchrohrs kontaktiert wird. Diese Arbeitsweise der Zyklone ist bekannt und bedarf somit hier keiner weiteren Erläuterungen.

Beim Betrieb der Zyklone kommt es nun unvermeidlich zu einer Ablagerung von Pulverpartikeln an den Innenwänden der Zyklone, insbesondere an den in Fig. 1 mit 46 bezeichneten Bereichen, aber auch an den Außenwänden der Tauchrohre 14. Bei einem Farbwechsel, also einer Beschichtung der Werkstücke in der Beschichtungskabine mit Pulver anderer Farbe, ist es deshalb, um das in den Zyklonen abgeschiedene Pulver wiederverwenden zu können, nicht nur erforderlich, den Pulverbehälter 20 auszuwechseln, sondern es muß eine gründliche Reinigung der Zyklone 10 erfolgen, weil es sonst zu den gefürchteten Vermischungen kommt. Dabei wird für die Reinigung die Verbindung von der Pulverbeschichtungskabine zu dem betreffenden Zyklon bzw. der betreffenden Zyklongruppe gesperrt und der Behälter 20 abgenommen, worauf dann Luft vom jetzt offenen unteren Ende des Zyklons 10 aus nach oben zum und durch den Reingaskanal 16 gesaugt wird. Dies führt zwar zu einer Abreinigung des größten Teils der Innenwandung des Zyklons 10, jedoch werden dabei die erwähnten kritischen Bereiche 46 vom Reinigungsluftstrom kaum oder nur sehr schlecht erreicht, weshalb man bisher stets manuell nachreinigen muß. Zu diesem Zweck werden die bisherigen derartigen Zyklone mit Putztüren ausgerüstet, um diese manuelle Nachreinigung zu ermöglichen.

Diese heute übliche Methode der Reinigung der Zyklonen beinhaltet jedoch mehrere Nachteile. So hängt die Reinigungsgüte wesentlich von der jeweiligen, die manuelle Reinigung durchführenden Person ab. Weiterhin wird, während des Vorgangs der manuellen Reinigung die erwähnte Reinigungsluft im wesentlichen durch die offene Reinigungstüre angesaugt, mit der Folge, daß beim Reinigen nach unten fallendes Pulver sich im unteren Innenwandbereich des Zyklons absetzen kann, weil die Saugwirkung in diesem Bereich jetzt nur mehr minimal ist. Man muß deshalb nach der manuellen Nachreinigung und Schließen der Putztüre den Vorgang des Durchströmenlassens von Reinigungsluft wiederholen. Der Zeitaufwand für die Reinigung ist somit beträchtlich, was insbesondere bei häufigem Farbwechsel zu langen Stillstandszeiten der Beschichtungsanlage führt. Hinzu kommt noch, daß es beim Zyklonbetrieb durch die Putztürenfugen hindurch zur Fremdluftansaugung kommt und daß die Fugenkanten an der Zykloninnenwand zu den Abscheidungswirkungsgrad meßbar beeinträchtigenden Strömungsstörungen führen; dies verhindernde aufwendige Türkonstruktionen und -fertigungsmethoden würden die Zyklon-Herstellungskosten beträchtlich erhöhen.

Um nun diese Nachteile zu vermeiden, ist der Boden 24 des Reingaskanals 16 im Bereich jedes Zyklons 10 mit einem lösbaren Bodenabschnitt 26 kreisscheibenförmiger Gestalt versehen, dessen Durchmesser etwas größer ist als der Außendurchmesser des Zyklons und der gegen diesen mittels Spannpratzen 36 geklemmt und abgedichtet wird. Jeder Spannpratzen 36 stützt sich auf einem Bolzen ab, der vom nicht-lösbaren Bereich des Bodens 24 des Ringkanals 16 absteht. Das Tauchrohr 14 ist zweckmäßigerweise mit dem zugehörigen lösbaren Bodenabschnitt 26 verbunden, beispielsweise in diesen eingesteckt oder mit diesem verschraubt oder verschweißt.

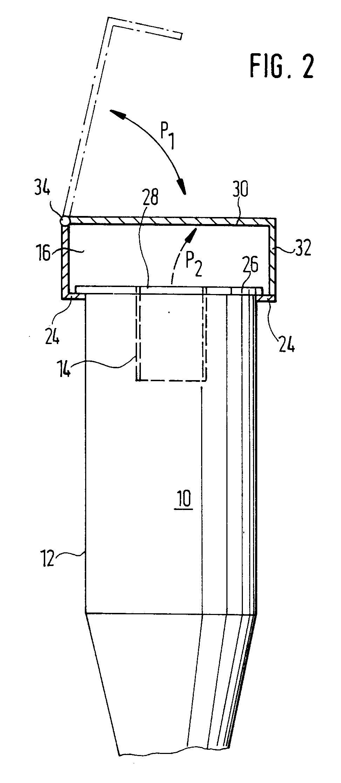

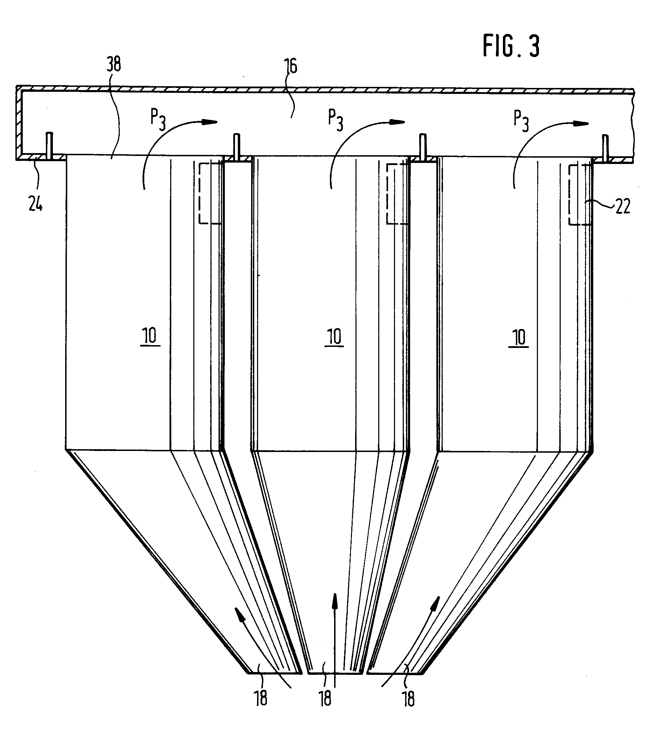

Zum Abreinigen eines Zyklons 10 werden nun, wie aus Fig. 2 ersichtlich, der Deckel 30 und eine Seitenwand 32 des Reingaskanals 16 um eine horizontale Achse 34 nach oben weggeschwenkt, wie durch den Pfeil P1 angedeutet ist. Die Spannpratzen 36 werden gelöst und der betreffende Bodenabschnitt 26 des Reingaskanals 16 wird zusammen mit dem fest mit ihm verbundenen Tauchrohr 14 in Richtung des Pfeils P2 aus dem Zyklon herausgenommen. Danach werden Deckel 30 und Seitenwand 32 wieder zurückgeschwenkt und damit der Reingaskanal geschlossen, worauf das zuvor abgestellte - nicht gezeichnete - Sauggebläse wieder eingeschaltet wird. Wie aus Fig. 3 ersichtlich, ergeben sich dabei in den Zyklonen glatte Durchgangskanäle für die Reinigungsluft, die von den unteren Enden 18 her durch die Zyklone nach oben hindurchströmt und über die Öffnungen 38 im Boden 24 des Reingaskanals 16 in diesen eintritt und dort weiterströmt, wie durch die Pfeile P3 angedeutet ist. Diese Luft wird dann beispielsweise durch ein Filter geleitet und dann an die Atmosphäre abgegeben. Der Strömungsweg der Reinigungsluft in den Zyklonen ist also nicht mehr durch Ecken, Kanten oder Totzonen behindert, so daß die Zyklone schnell, zuverlässig und einwandfrei gereinigt werden.

Die aus den Zyklonen 10 herausgenommenen Tauchrohre 14 mit daran befindlichen Bodenteilen 26 können schnell und einfach außerhalb der Zyklone mittels Druckluft abgeblasen werden, beispielsweise mittels Druckluftpistolen oder mittels fest an der Zykloneinheit angebrachten Druckluftdüsen. Nach dieser Abreinigung können die Tauchrohre mit den Bodenabschnitten wieder in die inzwischen ebenfalls gereinigten Zyklone eingesetzt werden, womit dann die Zyklone wieder betriebsbereit sind.

Der Vorteil besteht neben der exakten Reinigung vor allem in der Zeitersparnis; dadurch, daß das Abblasen von Tauchrohren und damit verbundenem Bodenabschnitt zugleich mit dem Abreinigen des Zykloninneren durch den Reinigungsluftstrom erfolgt, ergeben sich gegenüber dem vorab erwähnten, vorbekannten Reinigungsmethoden wesentlich verkürzte Stillstandsphasen der Anlage bei einem Farbwechsel.

Ebene in der Mittelsenkrechten zu der die beiden Kolbenstangen 52 verbindenden - gedachten - Geraden verschiebbar, derart, daß sie in ihrer in voll ausgezogenen Linien dargestellten Ruhestellung sich außerhalb des vertikal verschiebbaren Bodenteils 16 befinden und in ihrer ausgefahrenen Position das Tauchrohr 14 mit geringem Abstand nahezu als geschlossener Kreis konzentrisch umgeben. Die Druckluftzufuhr zu den Düsenrohren 54 erfolgt etwa über die hohl ausgebildeten Kolbenstangen 55. Die Steuerung der Kolbenstangen 52, der Kolbenstangen 55 und der Druckluftzufuhr zu den Düsenrohren 54 erfolgt über eine gemeinsame Steuereinrichtung.

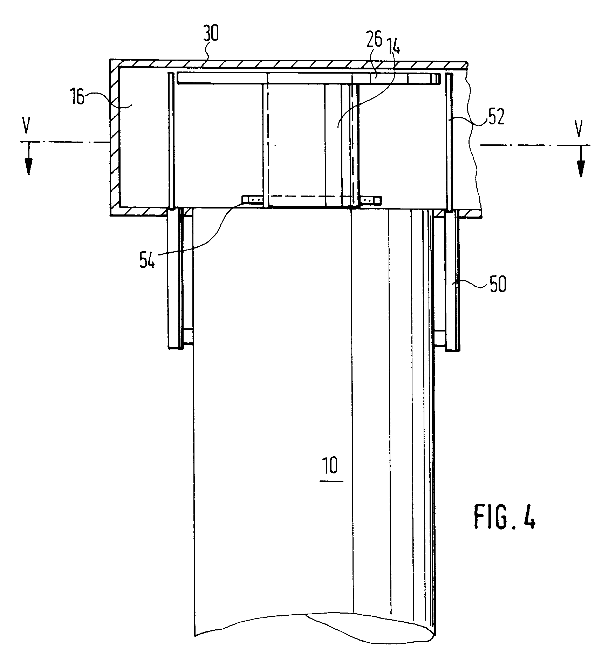

Zum Zweck der Reinigung wird das Bodenteil 26 und das Tauchrohr 14 aus dem Zyklon 10 mit Hilfe der Antriebszylinder 50 bzw. der Kolbenstangen 52 nach oben ausgefahren, und zwar in die in Fig. 4 dargestellte Position, also bis knapp unter oder bis zum Anschlag an den Deckel 30 des Reingaskanals 16. Zusammen mit dem Beginn des Anhebens des Bodenteils 26 wird die Druckluft für die Düsenrohre 54 freigegeben und, sobald die Bodenplatte 16 über die Ebene der Düsenrohre 54 hinaus angehoben ist, werden die Düsenrohre durch die Antriebszylinder 56 bzw. deren Kolbenstangen 55 in die in gestrichelten Linien dargestellte Position ausgefahren. Damit ergibt sich während des Hochfahrens von Bodenteil 16 und Tauchrohr 14 eine intensive Abreinigung dieser Bauteile, unterstützt durch die, wie beim Ausführungsbeispiel von Fig. 1, von unten her durch das Zykloninnere anströmende und in den Reingaskanal gelangende Reinigungsluft. Bei dieser Ausführungsform ist es also nicht erforderlich, den Reingaskanal zu öffnen und der gesamte Reinigungsvorgang kann derart mechanisiert werden, daß der gesamte Vorgang vollautomatisch abläuft, ausgelöst beispielsweise durch einen elektrischen, auf Magnetventile einwirkenden Schalter. Im letzteren Fall bereitet es dann auch keine Schwierigkeiten, die Zeitabläufe der Bewegungs- und Blasvorgänge in durch ein Programm vorgegebener Weise gegenseitig abzustimmen.

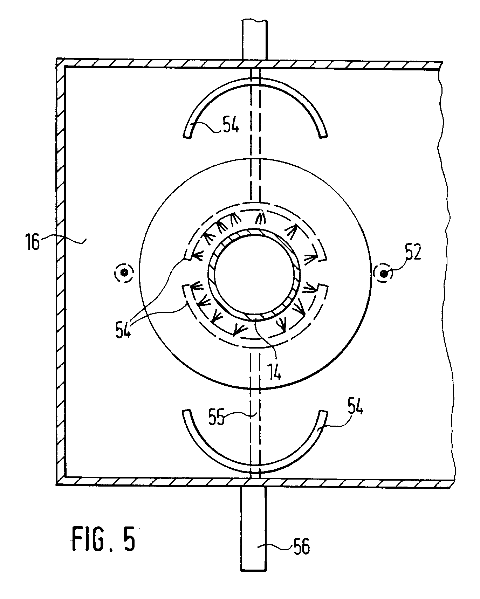

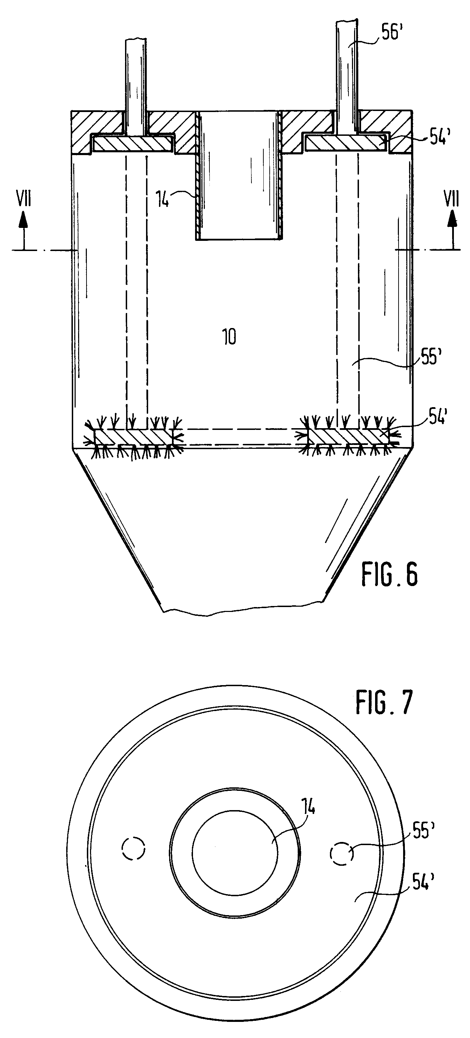

Eine weitere, ebenfalls vollmechanisierbare Ausführungsform ist den Fig. 6 und 7 entnehmbar. Diese Ausführungsform unterscheidet sich von derjenigen nach den Fig. 4 und 5 dadurch, daß Tauchrohr 14 und Bodenteil 16 ortsfest bleiben und die Düsenrohre parallel zur Zyklonlängsachse innerhalb des Zyklons verschiebbar sind. Die an den Kolbenstangen 55 befestigten Düsenrohre 54' sind hier in Form von Halbkreisringen ausgebildet, die in ihrer zurückgezogenen Position in Ausnehmungen 16' des Bodenteils 16 einliegen und aus dieser Position vertikal nach unten ausfahrbar sind (gestrichelte Position). Die Düsenrohre 54' sind allseitig mit Austrittsdüsen versehen. Die Druckluftzufuhr erfolgt beispielsweise durch die Kolbenstangen 55'. Für die Reinigung werden die Düsenrohre 54' langsam nach unten ausgefahren, womit sie den Außenmantel des Tauchrohrs 14 und zugleich die Unterseite des Bodenteils 16 abreinigen. Auch hier wird die Reinigung durch den von unten nach oben gerichteten Reinigungsluftstrom unterstützt und das Abreinigungspulver mit diesem Reinigungsluftstrom über den Reingaskanal und ein Filter abgeführt.

Besonders zweckmäßig ist es, wenn die Düsenrohre 54' über das Tauchrohr 14 hinaus nach unten ausgefahren werden können, insbesondere bis zu der Stelle, an welcher der geradzylindrische Gehäuseteil in den konischen Gehäuseteil übergeht, wie dies auch in Fig. 6 gezeigt ist. Damit wird auch der geradzylindrische Innenwandteil des Zyklons durch die Druckluft abgeblasen, was insbesondere dann vorteilhaft ist, wenn es sich um stark haftendes oder gar schmierendes Pulver handelt.

In Abwandlung der eben beschriebenen Ausführungsform ist es auch denkbar, insbesondere bei vergleichsweise kurzen Tauchrohren 14, die Stangen 55' von beiden Seiten her horizontal in den Zyklon 10 einzuführen, in welchem Fall dann die Seitenwand des Zyklons so auszubilden ist, wie dies in Fig. 6 für die Deckwand des Zyklons bzw. die Bodenwand des Reingaskanals dargestellt ist, also derart, daß die beiden zueinander diametralen Düsenrohre 54' in ihrer Ruhestellung in die Zyklonseitenwand zurückgezogen sind, in ihrer - hier in horizontaler Richtung - ausgefahrenen Position dagegen das Tauchrohr in vergleichsweise geringem Abstand umgeben. Wie gesagt, kann diese Abwandlungsform nur bei kurzen Tauchrohren Anwendung finden und darüberhinaus ist sicherzustellen, daß die Düsenrohre im zurückgezogenen Zustand den Abscheidungsvorgang während des Zyklonbetriebes nicht stören.

Selbstverständlich können die oben dargestellten Ausführungsformen des Zyklons auch miteinander kombiniert werden. So ist es beispielsweise möglich, auch bei der Ausführungsform nach Fig. 4 den Reingaskanal gemäß Fig. 2 aufklappbar auszubilden. Eine weitere Kombinationsmöglichkeit besteht darin, daß im Zyklon sowohl Düsenrohre 54 gemäß Fig. 4 als auch Düsenrohre 54' gemäß Fig. 6 vorgesehen sind.

Die Erfindung erbringt schließlich, insbesondere im Rahmen ihrer Ausführungsform nach Fig. 1, noch einen weiteren Vorteil. So werden beim Pulverbeschichten unter anderem auch Pulversorten verwendet, die Partikel mit unterschiedlichem spezifischem Gewicht enthalten, zum Beispiel Metallicpulver. Beim Abscheiden solcher Pulver in den Zyklonen neigen diese Pulver dazu, sich zu entmischen, d.h., die schwereren Partikel fallen im Zyklon nach unten, während die Gefahr besteht, daß die leichteren Partikel von der Absaugluft mitgenommen werden.

Zum Abscheiden solcher Pulver werden bisher eigene Rückgewinnungssysteme verwendet, z.B. Zyklone mit fest eingebauten Filtern, z.B. Platten- oder Patronenfiltern.

Die Erfindung ermöglicht es nun, ein und denselben Zyklon sowohl mit Tauchrohr als auch mit Filterpatrone zu verwenden, so daß sowohl die üblichen Pulver als auch spezielle Pulver, wie z.B. Metallicpulver, von der Absaugluft getrennt und im Zyklon rückgewonnen werden können.

## Patentansprüche

1. Kombination eines Reingaskanals und eines Zyklons zum Abscheiden von aus einer Pulverbeschichtungskabine abgesaugtem Überschußpulver mit Pulveraustrag am unteren Ende und Reinluftaustrag über ein von oben in das Zykloninnere hineinragendes Tauchrohr (14), das am Boden (26) des Reingaskanals (16) hängt, dadurch gekennzeichnet daß der Boden (26) des Reingaskanals (16) den Zyklon abdeckt und ein Teil (26) dieses Bodens zusammen mit dem an ihm hängenden Tauchrohr (14) über den an seiner Decke (30) und/oder wenigstens an einer Seitenwand (32) zu öffnenden Reingaskanal (16) aus dem Zyklon (10) herausnehmbar ist und daß außerhalb des Reingaskanals (16) Druckluftdüsen vorgesehen sind.

2. Kombination nach Anspruch 1, dadurch gekennzeichnet, daß die Flächengröße des herausnehmbaren Bodenteils (26) des Reingaskanals (16) wenigstens gleich dem Öffnungsquerschnitt des Zyklons (10) an seinem oberen Ende ist und daß dieses Bodenteil (26) an den oberen Enden des Zyklons (10) durch Befestigungselemente (36) gehaltert ist.

3. Kombination nach Anspruch 1 oder 2, dadurch gekennzeichnet, daß das Tauchrohr (14) mit dem herausnehmbaren Bodenteil (26) des Reingaskanals (10) verbunden, vorzugsweise gesteckt, verschraubt oder verschweißt ist.

4. Kombination eines Reingaskanals und eines Zyklons zum Abscheiden von aus einer Pulverbeschichtungskabine abgesaugtem Überschußpulver mit Pulveraustrag am unteren Ende und Reinluftaustrag über ein von oben in das Zykloninnere hineinragendes Tauchrohr (14), das am Boden (26) des Reingaskanals (16) hängt, dadurch gekennzeichnet, daß der Boden (26) des Reingaskanals (16) den Zyklon abdeckt, daß das Tauchrohr (14) zusammen mit einem Teil (26) dieses Bodens hydraulisch, pneumatisch oder mittels Federn aus dem Zyklon (10) nach oben in den Reingaskanal (16) herausfahrbar ist und daß im Reingaskanal (16) Druckluftdüsen (54) angeordnet sind.

5. Kombination nach Anspruch 4, dadurch gekennzeichnet, daß am Zyklon (10) Hydraulik- oder Pneumatikzylinder (50) angeordnet sind, deren Kolbenstangen (52) mit dem Bodenteil (26) verbunden sind, und daß am Reingaskanal (16) weitere Hydraulik- oder Pneumatikzylinder (56) angeordnet sind, deren Kolbenstangen (55) mit die Druckluftdüsen aufweisenden Düsenrohren (54) verbunden sind.

6. Kombination nach Anspruch 4 oder 5, dadurch gekennzeichnet, daß die Druckluftdüsen im Reingaskanal (16) zwei halbringförmige Düsenrohre (54') sind.

7. Kombination eines Reingaskanals und eines Zyklons zum Abscheiden von aus einer Pulverbeschichtungskabine abgesaugtem Überschußpulver mit Pulveraustrag am unteren Ende und Reinluftaustrag über ein von oben in das Zykloninnere hineinragendes Tauchrohr (14), das am Boden (26) des Reingaskanals (16) hängt, dadurch gekennzeichnet daß der Boden (26) des Reingaskanals (16) den Zyklon abdeckt und im Zyklon (10) halbringförmige Düsenrohre (54') angeordnet sind, die mittels Pneumatik- oder Hydraulikzylinder (56') parallel zur Tauchrohrachse zwischen Zyklonwandung und Tauchrohr (14) an diesem vorbeifahrbar sind.

8. Kombination eines Reingaskanals und eines Zyklons zum Abscheiden von aus einer Pulverbeschichtungskabine abgesaugtem Überschußpulver mit Pulveraustrag am unteren Ende und Reinluftaustrag über ein von oben in das Zykloninnere hineinragendes Tauchrohr (14), das am Boden (26) des Reingaskanls (16) hängt, dadurch gekennzeichnet daß der Boden (26) des Reingaskanals (16) den Zyklon abdeckt und im Zyklon (10) halbkreisförmige Düsenrohre angeordnet sind, die mittels Pneumatik- oder Hydraulikzylinder senkrecht zur Tauchrohrachse an das Tauchrohr (14) annäherbar sind.

9. Kombination nach Anspruch 7 oder 8, dadurch gekennzeichnet, daß die Düsenrohre (54') in ihrer zurückgezogenen Position im Reingasboden (26) bzw. in der Seitenwand des Zyklon versenkt sind.

10. Kombination nach Anspruch 7 oder 9 mit einem oberen, geradzylindrischen und einem unteren, sich konisch verjüngenden Gehäuseabschnitt, dadurch gekennzeichnet, daß die Düsenrohre (54') nach unten über das Tauchrohr (14) hinaus bis in die Ebene des Übergangs des geradzylindrischen in den konischen Gehäuseabschnitt absenkbar sind.

11. Verfahren zum Reinigen einer Kombination nach einem der Ansprüche 1 bis 10, zum Abscheiden von aus einer Pulverbeschichtungskabine abgesaugtem Überschußpulver mit Pulveraustrag am unteren Ende und Reinluftaustrag über ein von oben in das Zykloninnere hineinragendes Tauchrohr (14), das am Boden (26) eines Reingaskanls (16) hängt, wobei Reinigungsluft vom unteren Ende des Zyklons über das Zykloninnere und den Reingaskanal (16) gesaugt wird, dadurch gekennzeichnet, daß zugleich mit dem Hindurchsaugen der Reinigungsluft zumindest der Außenmantel des Tauchrohrs (14) und die dem Zykloninneren zugewandte Oberfläche des Reingaskanalbodens (26) mittels aus Düsen (54, 54') austretender und unmittelbar auf diese Flächen auftreffender Druckluftstrahlen abgereinigt werden.

## Claims

1. Combination of a clean gas channel and a cyclone for separating excess powder aspirated from a powder coating cabin, with powder discharged at the lower end and cleaning air exiting via an immersion tube (14) projecting from atop into the interior of the cyclone and being suspended on the bottom (26) of the clean gas channel (16), **characterized** in that the bottom (26) of the clean gas channel (16) covers the cyclone and a part (26) of the bottom is removable from the cyclone (10) together with the suspended immersion tube (14) via the clean gas channel (16) which is to be opened at its top (30) and/or at least at one side wall (32), and in that compressed air nozzles are provided outside the clean gas channel (16).

2. Combination according to claim 1,
**characterized** in that the areal dimension of the removable bottom part (26) of the clean gas channel (16) is at least equal to the opening cross section of the cyclone (10) at its upper end, and that this bottom part (26) is mounted at the upper ends of the cyclone (10) through fastening elements (36).

3. Combination according to claim 1 or 2,
**characterized** in that the immersion tube (14) is connected, preferably plugged, screwed or welded, with the removable bottom part (26) of the clean gas channel (10).

4. Combination of a clean gas channel and a cyclone for separating excess powder aspirated from a powder coating cabin with powder discharged at the lower end and cleaning air exiting via an immersion tube (14) projecting from atop into the interior of the cyclone and bing suspended on the bottom (26) of the clean gas channel (16),
**characterized** in that the bottom (26) of the clean gas channel (16) covers the cyclone, that the immersion tube (14) together with a part (26) of the bottom is upwardly retractable hydraulically, pneumatically or by means of springs from the cyclone (10) into the clean gas channel (16) and that compressed air nozzles (54) are arranged in the clean gas channel (16).

5. Combination according to claim 4,
**characterized** in that hydraulic cylinders or pneumatic cylinders (50) are arranged at the cyclone (10), with their piston rods (52) being connected with the bottom part (26), and that further hydraulic cylinders or pneumatic cylinders (56) are arranged at the clean gas channel (16), with their piston rods (55) being connected with nozzle pipes (54) which comprise the compressed air nozzles.

6. Combination according to claim 4 or 5,
**characterized** in that the compressed air nozzles in the clean gas channel (16) are two nozzle pipes (54') of semicircular configuration.

7. Combination of a clean gas channel and a cyclone for separating excess powder aspirated from a powder coating cabin, with powder discharged at the lower end and cleaning air exiting via an immersion tube (14) projecting from atop into the interior of the cyclone and being suspended on the bottom (26) of the clean gas channel (16), **characterized** in that the bottom (26) of the clean gas channel (16) covers the cyclone and the cyclone (10) is provided with semicircular nozzle pipes (54') which are movable parallel to the immersion tube axis past the immersion tube (14) between the cyclone wall and immersion tube (14) by means of pneumatic cylinders or hydraulic cylinders (56').

8. Combination of a clean gas channel and a cyclone for separating excess powder aspirated from a powder coating cabin, with powder discharged at the lower end and cleaning air exiting via an immersion tube (14) projecting from atop into the interior of the cyclone and being suspended on the bottom (26) of the clean gas channel (16), **characterized** in that the bottom (26) of the clean gas channel (16) covers the cyclone and the cyclone (10) includes semicircular nozzle pipes which are movable perpendicular to the axis of the immersion tube by means of pneumatic cylinders or hydraulic cylinders to approach the immersion tube (14).

9. Combination according to claim 7 or 8,
**characterized** in that in their retracted position the nozzle pipes (54') are sunk in the clean gas channel bottom (26) or in the side wall of the cyclone, respectively.

10. Combination according to claim 7 or 9 with an upper straight cylindrical housing section and a lower tapered housing section,
**characterized** in that the nozzle pipes (54') are lowerable downwards beyond the immersion tube (14) towards the plane of the junction of the straight cylindrical housing section and the tapered housing section.

11. Method for cleaning a combination according to one of claims 1 to 10 for separating excess powder aspirated from a powder coating cabin, with powder discharged at the lower end and cleaning air exiting via an immersion tube (14) projecting from atop into the interior of the cyclone and being suspended on the bottom (26) of the clean gas channel (16), whereby cleaning air is aspirated from the lower end of the cyclone via the interior of the cyclone and the clean gas channel (16),
**characterized** in that simultaneously with the aspiration of cleaning air at least the outer surface of the immersion tube (14) and the cyclone interior facing surface of the bottom of the clean gas channel (26) are cleansed by means of compressed air blasts which exit from nozzles (54, 54') and directly impact these surfaces.

## Revendications

1. Combinaison d'un conduit de gaz épuré et d'un cyclone destinée à séparer un excédent de poudre pris par aspiration dans une cabine de revêtement par poudre, comportant une sortie de poudre à l'extrémité inférieure et une sortie de gaz épuré passant par un tube plongeur (14) qui plonge de haut en bas dans le volume intérieur du cyclone et qui est suspendu au fond (26) du conduit (16) de gaz épuré, caractérisée en ce que le fond (26) du conduit (16) de gaz épuré recouvre le cyclone et une partie (26) de ce fond, avec le tube plongeur (14) qui y est suspendu, peut être enlevée du cyclone (10) en passant par le conduit de gaz épuré (16) qui s'ouvre au niveau de son plafond (30) et/ou au moins au droit d'une paroi latérale (32), et en ce que des buses d'air comprimé sont prévues à l'extérieur du conduit de gaz épuré (16).

2. Combinaison selon la revendication 1, caractérisée en ce que l'aire de la surface de la partie amovible (26) du fond du conduit (16) de gaz épuré est au moins égale à la section d'ouverture du cyclone (10) au niveau de son extrémité supérieure et en ce que cette partie (26) du fond est fixée aux extrémités supérieures du cyclone (10) par des éléments de fixation (36).

3. Combinaison selon la revendication 1 ou 2, caractérisée en ce que le tube plongeur (14) est fixé à la partie amovible (26) du fond du conduit (10) de gaz épuré, de préférence par emmanchement, vissage ou soudage.

4. Combinaison d'un conduit de gaz épuré et d'un cyclone destinée à séparer un excédent de poudre pris par aspiration dans une cabine de revêtement par poudre, comportant une sortie de poudre à l'extrémité inférieure et une sortie de gaz épuré passant par un tube plongeur (14) qui plonge de haut en bas dans le volume intérieur du cyclone et qui est suspendu au fond (26) du conduit (16) de gaz épuré, caractérisée en ce que le fond (26) du conduit (16) de gaz épuré recouvre le cyclone, en ce que le tube plongeur (14) peut être extrait de bas en haut en s'engageant dans le conduit (16) de gaz épuré avec une partie (26) de ce fond, sous l'action de moyens hydrauliques ou pneumatiques ou à l'aide de ressorts, et en ce que des buses d'air comprimé (54) sont disposées dans le conduit (16) de gaz épuré.

5. Combinaison selon la revendication 4, caractérisée en ce que, sur le cyclone (10), sont agencés des vérins hydrauliques ou pneumatiques (50) dont les tiges de pistons (52) sont réunies à la partie (26) du fond et en ce que, sur le conduit (16) de gaz épuré sont agencés d'autres vérins hydrauliques ou pneumatiques (56) dont les tiges de pistons (55) sont réunies à des rampes de buses (54) qui portent les buses d'air comprimé.

6. Combinaison selon la revendication 4 ou 5, caractérisée en ce que les buses d'air comprimé prévues dans le canal (16) de gaz épuré sont deux rampes de buses semicirculaires (54').

7. Combinaison d'un conduit de gaz épuré et d'un cyclone destinée à séparer un excédent de poudre pris par aspiration dans une cabine de revêtement par poudre, comportant une sortie de poudre à l'extrémité inférieure et une sortie de gaz épuré passant par un tube plongeur (14) qui plonge de haut en bas dans le volume intérieur du cyclone et qui est suspendu au fond (26) du conduit (16) de gaz épuré, caractérisée en ce que le fond (26) du conduit (16) de gaz épuré recouvre le cyclone et que, dans le cyclone (10), sont agencées des rampes de buses semicirculaires (54') qu'on peut déplacer parallèlement à l'axe du tube plongeur (14) le long de ce tube, entre la paroi du cyclone et le tube plongeur (14), au moyen de vérins pneumatiques ou hydrauliques (56').

8. Combinaison d'un conduit de gaz épuré et d'un cyclone destinée à séparer un excédent de poudre pris par aspiration dans une cabine de revêtement par poudre, comportant une sortie de poudre à l'extrémité inférieure et une sortie de gaz épuré passant par un tube plongeur (14) qui plonge de haut en bas dans le volume intérieur du cyclone et qui est suspendu au fond (26) du conduit (16) de gaz épuré, caractérisée en ce que le fond (26) du conduit (16) de gaz épuré recouvre le cyclone et que, dans le cyclone (10), sont agencées des rampes de buses semicirculaires qui peuvent être rapprochées du tube plongeur (14) dans une direction perpendiculaire à l'axe du tube plongeur, au moyen de vérins pneumatiques ou hydrauliques.

9. Combinaison selon la revendication 7 ou 8, caractérisée en ce que, dans leur position rétractée, les rampes de buses (54') sont escamotées dans le fond (26) du conduit de gaz épuré ou dans la paroi latérale du cyclone.

10. Combinaison selon la revendication 7 ou 9, comprenant un segment de corps supérieur cylindrique droit et un segment de corps inférieur qui se rétrécit en cône, caractérisée en ce que les rampes de buses (54') peuvent être abaissées au-delà du tube plongeur (14), jusque dans le plan de la jonction entre le segment cylindrique droit et le segment conique du corps.

11. Procédé de nettoyage d'une combinaison selon une des revendications 1 à 10, destinée à séparer un excédent de poudre pris par aspiration dans une cabine de revêtement par poudre, comprenant une sortie de poudre à l'extrémité inférieure et une sortie d'air épuré passant par un tube plongeur (14) qui plonge de haut en bas dans le volume intérieur du cyclone et qui est suspendu au fond (26) d'un conduit (16) de gaz épuré, dans lequel l'air de nettoyage est aspiré à partir de l'extrémité inférieure du cyclone, en passant par l'intérieur du cyclone et par le conduit (16) de gaz épuré, caractérisé en ce que, simultanément avec l'aspiration de l'air de nettoyage à travers l'appareil, au moins la paroi extérieure du tube plongeur (14) et la surface du fond (26) du conduit de gaz épuré qui est dirigée vers le volume intérieur du cyclone sont nettoyées au moyen de jets d'air comprimé qui sortent des buses (54, 54') et sont projetés directement sur ces surfaces.
